# EUROPEAN PATENT APPLICATION

(11) **EP 2 128 751 A1**
(43) Date of publication of application: **02.12.2009**
(21) Application number: 07738802.3
(22) Date of filing: 16.03.2007
(51) Int. Cl.: G06F 3/048, G06F 21/24

(54) **INFORMATION PROCESSING APPARATUS, INFORMATION PROCESSING PROGRAM, AND INFORMATION PROCESSING METHOD**

(71) Applicant: Fujitsu Limited, Kawasaki-shi, Kanagawa 211-8588 (JP)
(72) Inventor: TSUJI, Kentaro, Kawasaki-shi Kanagawa 211-8588 (JP); SEGAWA, Eigo, Kawasaki-shi Kanagawa 211-8588 (JP)
(74) Representative: Kreutzer, Ulrich
(86) International application number: PCT/JP2007/055357
(87) International publication number: WO 2008/126185

(57) **Abstract**

An information processing apparatus that controls a display device capable of displaying information includes: a positional relation acquisition section that detects a person who is in a predetermined area around the display device and acquires a positional relation between the person and the display device; and a control section that stores a correspondence between the positional relation and the state of displaying on the display device and controls the state of displaying on the display device based on the correspondence and the positional relation acquired by the positional relation acquisition section.

## Description

### Technical Field

The present invention relates to an information processing apparatus, an information processing program, and an information processing method that control a display device capable of displaying information.

### Background Art

An widely-used terminal, such as PC (Personal Computer), that provides services includes a function to authenticate a user using a password, a fingerprint, an iris, a vein, or the like, in order to allow only an authorized user to use services.

Moreover, there is a technique that prevents an unauthorized person behind or next to the user from watching information displayed on a monitor when there is a plurality of people around the terminal that provides services (see Patent Document 1, for example). According to the technique, a person in an area where the services are available is detected by a camera, RFID (Radio Frequency Identification), or the like. Subsequently, each person is identified by face authentication, or the like. If there is any person other than those who are allowed to access, control processes such as suspending or halting the services are carried out to increase the level of security.

Similarly, there is a technique that detects a person in front of an information display device and then makes a determination as to whether to display information (see Patent Document 2, for example). According to the technique, a camera is installed so as to face an operator of the information display device. If an face not registered in advance is detected from the footage, the information display device stops displaying information, thereby preventing information from leaking even when a person who is not registered peers at the information.

Meanwhile, there is a technique that takes into account the operational efficiency of an authorized user who uses information (see Patent Document 3, for example). According to the technique, a liquid-crystal shutter is installed on the front of a liquid crystal display. When the user looks at the liquid crystal display from a different direction, a different image is provided. Therefore, information is displayed only toward the authorized user, thereby preventing information from leaking to those who do not have the right of access.

Moreover, as a conventional art related to the present invention, there is a technique that detects an object on an image taken by a camera (see Patent Document 4, for example). Moreover, there is a technique that extracts a pedestrian using a laser scanner (Non-Patent Document 1, for example). Moreover, there is a technique that tracks the position of a moving object using a back projection method and Kalman filter (see Non-Patent Document 2, for example). Moreover, there is a standard for the estimation of minimum legible size for characters(see Non-Patent Document 3, for example.
Patent Document 1: Japanese Laid-Open Patent Publication No. 09-297735
Patent Document 2: Japanese Laid-Open Patent Publication No. 2005-346307
Patent Document 3: Japanese Laid-Open Patent Publication No. 2005-107306
Patent Document 4: Japanese Laid-Open Patent Publication No. 2006-302115
Non-Patent Document 1: Katsuyuki Nakamura, "Tracking Pedestrians Using a Multi-Laser Scanner," IEICE (Institute of Electronics, Information and Communication Engineers) transactions, D-II, VOL.J88-D-II, No.7, pp. 1143-1152, July 2005
Non-Patent Document 2: Mitsuharu Hayasaka, Hideyoshi Tominaga, and Kazumi Komiya, "Multiple Object Tracking Using Back Projection Method and Kalman Filter," PRMU2001-132, pp. 133-138, November 2001
Non-Patent Document 3: JIS S0032, *Guidelines for the elderly and people with disabilities - Visual signs and displays - Estimation of minimum legible size for a Japanese single character*

### Disclosure of the Invention

### Problems to be Solved by the Invention

However, when only an area where services are available is under surveillance as in the case of the technique of Patent Document 1, control for providing information is carried out after a person who does not have the right to use the services intrudes into the area and is detected. Therefore, information may leak during a period of time from when a person intrudes until control starts. Moreover, if the premise is that a person carries a special device like RFID, those who do not carry the device are not detected. Therefore, information may leak from these people. Moreover, according to the technique of Patent Document 2, the displayed information disappears immediately after a person who is not registered is detected, leading to a decline in operational efficiency because the user who uses the information is suddenly forced to stop his or her work without any preparation. Moreover, the technique of Patent Document 3 cannot prevent a person whose line of sight is nearly aligned with that of the authorized information user from peering at the information because of the structure. Therefore, it is difficult to say that the level of security is high.

The present invention has been made to solve the above problems. The object of the present invention is to provide an information processing apparatus, an information processing program, and an information processing method that prevent the information displayed on the display device from leaking.

### Means for Solving the Problems

To solve the above problems, according to the present invention, an information processing apparatus that controls a display device capable of displaying information includes: a positional relation acquisition section that detects a person who is in a predetermined area around the display device and acquires a positional relation between the person and the display device; and a control section that stores a correspondence between the positional relation and the state of displaying on the display device and controls the state of displaying on the display device based on the correspondence and the positional relation acquired by the positional relation acquisition section.

Moreover, according to the present invention, an information processing program that causes a computer to perform a process of controlling a display device capable of displaying information, includes: a positional relation acquisition step that detects a person who is in a predetermined area around the display device and acquires a positional relation between the person and the display device; and a control step that stores a correspondence between the positional relation and the state of displaying on the display device and controls the state of displaying on the display device based on the correspondence and the positional relation acquired by the positional relation acquisition section.

Furthermore, according to the present invention, an information processing method that controls a display device capable of displaying information, includes: a positional relation acquisition step that detects a person who is in a predetermined area around the display device and acquires a positional relation between the person and the display device; and a control step that stores a correspondence between the positional relation and the state of displaying on the display device and controls the state of displaying on the display device based on the correspondence and the positional relation acquired by the positional relation acquisition section.

### Brief Description of the Drawings

FIG. 1 is a block diagram illustrating an example of the configuration of an information display system according to Embodiment 1.
FIG. 2 is a block diagram illustrating an example of the configuration of a server and an access terminal according to Embodiment 1.
FIG. 3 shows a table as an example of a position management table according to Embodiment 1.
FIG. 4 shows a table as an example of a prediction time management table according to Embodiment 1.
FIG. 5 shows a table as an example of an ID access right management table according to Embodiment 1.
FIG. 6 shows a table as an example of a type-of-work access right management table according to Embodiment 1.
FIG. 7 shows a table as an example of an area management table according to Embodiment 1.
FIG. 8 is a flowchart illustrating an example of the operation of the information display system according to Embodiment 1.
FIG. 9 is a block diagram illustrating an example of the configuration of an information display system according to Embodiment 2.
FIG. 10 is a block diagram illustrating an example of the configuration of a server and an access terminal according to Embodiment 2.
FIG. 11 is a block diagram illustrating another example of the configuration of an information display system according to Embodiment 2.
FIG. 12 is a block diagram illustrating an example of the configuration of an information display system according to Embodiment 3.
FIG. 13 is a block diagram illustrating an example of the configuration of a computer according to Embodiment 3.
FIG. 14 is a flowchart illustrating an example of a detection process by the computer according to Embodiment 3.
FIG. 15 is a flowchart illustrating an example of a display process by the computer according to Embodiment 3.
FIG. 16 is a conceptual diagram illustrating an example of a display information change process according to Embodiment 3.
FIG. 17 shows a table as a first example of a display character size selection table according to Embodiment 3.
FIG. 18 shows a table as a second example of a display character size selection table according to Embodiment 3.
FIG. 19 shows a table as a third example of a display character size selection table according to Embodiment 3.
FIG. 20 shows a screen as a first example of a display information change process according to Embodiment 3.
FIG. 21 shows a screen as a second example of a display information change process according to Embodiment 3.
FIG. 22 is a conceptual diagram illustrating an example of a display information change process according to Embodiment 4.
FIG. 23 shows a table as a first example of a display contrast strength selection table according to Embodiment 4.
FIG. 24 shows a table as a second example of a display contrast strength selection table according to Embodiment 4.
FIG. 25 shows a table as a third example of a display contrast strength selection table according to Embodiment 4.
FIG. 26 shows a screen as a first example of a display information change process according to Embodiment 4.
FIG. 27 shows a screen as a second example of a display information change process according to Embodiment 4.
FIG. 28 is a conceptual diagram illustrating an example of a display information change process according to Embodiment 5.
FIG. 29 is a flowchart illustrating an example of a display information change process according to Embodiment 5.

### Best Mode for Carrying Out the Invention

Hereinafter, embodiments of the present invention will be described with reference to the accompanying drawings.

### Embodiment 1

Here, an example of an information display system to which an information processing apparatus of the present invention is applied will be described. Moreover, according to the present embodiment, the information display system includes an authentication device.

First, the following describes the configuration of the information display system according to the present embodiment.

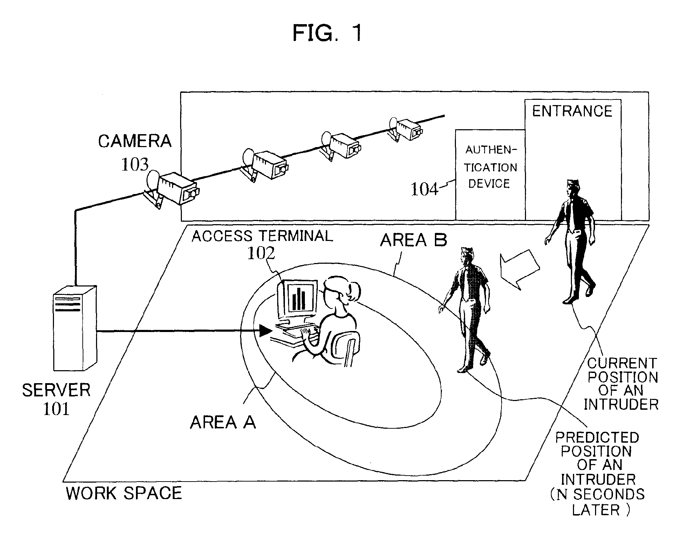

FIG. 1 is a block diagram showing an example of the configuration of the information display system according to the present embodiment. The information display system includes a server (information processing apparatus) 101, an access terminal (display device) 102, one or a plurality of cameras 103, and an authentication device 104. The access terminal 102 displays characters, images, sounds or the like according to user operation. An area A is an area where an intruder can look at the information displayed on the access terminal 102, or an area where the intruder can operate the access terminal 102. An area B exists outside the area A. The size of the area B is determined so as to allow a user of the access terminal 102 to complete a process for preventing information from leaking, such as suspending work, until the intruder enters the area A after entering the area B.

The camera 103 takes pictures of a work space (a predetermined area) including the access terminal 102, and continuously outputs a plurality of images. The work space is, for example, an entire room where the access terminal 102 is placed. The authentication device 104 is placed in the work space, for example, at the entrance to the work-space room. The authentication device 104 authenticates who a person who has performed an authentication operation is by carrying out, for example, biometric authentication such as fingerprint recognition. Incidentally, there may not be the authentication device 104 besides the camera 103. The camera 103 may take a picture of the face of the person, with the server 101 carrying out face authentication to authenticate the person.

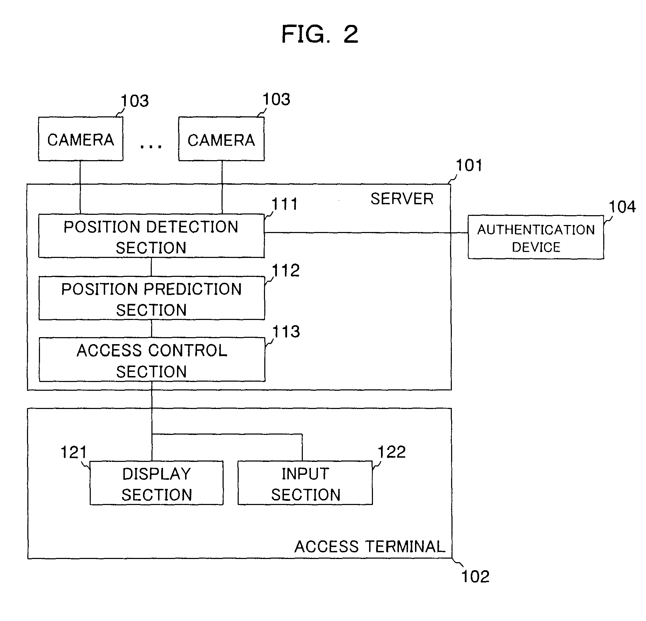

FIG. 2 is a block diagram illustrating an example of the configuration of the server and the access terminal, according to the present embodiment. The server 101 includes a position detection section 111, a position prediction section 112, and an access control section 113. The access terminal 102 has a display section 121 including a monitor and a speaker, and an input section 122 including a keyboard and a mouse.

The position detection section 111 detects a person who has entered the work space using an image taken by the camera. The position detection section 111, for example, detects the person from the image using the technique of Patent Document 3. Moreover, the positions of places shown in the image are associated with the positions of places within the work space in advance. Therefore, the position detection section 111 detects the position of the person in the work space.

Moreover, after the authentication device 104 identifies the person who has performed the authentication operation, the position detection section 111 regards the person the position detection section 111 has detected at the time of the identification process at the place where the authentication device 104 is placed as an authenticated person, and records the authenticated person. Moreover, the position detection section 111 records a person who was not identified by the authentication device 104 or a person who has not performed the authentication operation as an unauthenticated person. The position detection section 111 allocates already-registered IDs to the authenticated persons, and other IDs that are different from each other to the unauthenticated persons.

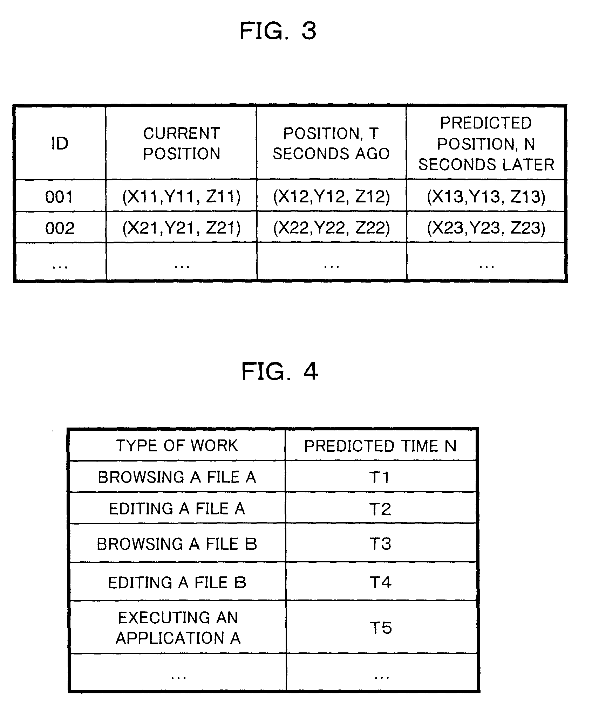

The position prediction section 112 manages a position management table, a prediction time management table, an ID access right management table, a type-of-work access right management table, and an area management table. FIG. 3 shows a table as an example of the position management table according to the present embodiment. The position prediction section 112 acquires the position and ID of the person detected by the position detection section 111, and uses the position management table to manage, on a per person basis, IDs; current positions of the persons; positions where the persons were a predetermined period of time (T seconds) ago; and predicted positions where the persons might be after a prediction time (N seconds) has passed. Moreover, the position detection section 111 associates the current image of the whole body or part of the body of the person with the past image. In this manner, the position detection section 111 records the history of the persons' positions. Here, the positions where the persons were T seconds ago, and the current positions are recorded. Here, the position detection section 111 uses, for example, the normalized correlation of gray values between the two images, and associates portions that have the highest correlation values as the same portion (person).

FIG. 4 shows a table as an example of the prediction time management table according to the present embodiment. The prediction time is set for each expected type of work (each type of display information), and stored in the prediction time management table in advance. The position prediction section 112 acquires from the access control section 113 the current type of work the user of the access terminal 102 is engaged in, and determines the prediction time based on the type of work and the prediction time management table.

The position prediction section 112 predicts the position where the person might be N seconds later, based on the current position and the position where the person was T seconds ago that are stored in the above position management table. Incidentally, the position detection section 111 may record more past positions, with the position prediction section 112 predicting the position where the person might be N seconds later from the recorded past positions. Here, the position prediction section 112, for example, approximates the relation between the time and position of the person from past to present by a linear function. The position prediction section 112 uses the function to predict the position where the person might be a predetermined period of time later, and regards the position as the predicted position. Incidentally, the position prediction section 112 may turn the movement of the person into a model, and predict the position based on the model. For example, the position prediction section 112 turns the movement of the person into a model by uniform motion, and uses Kalman filter to predict the position where the person might be N seconds later.

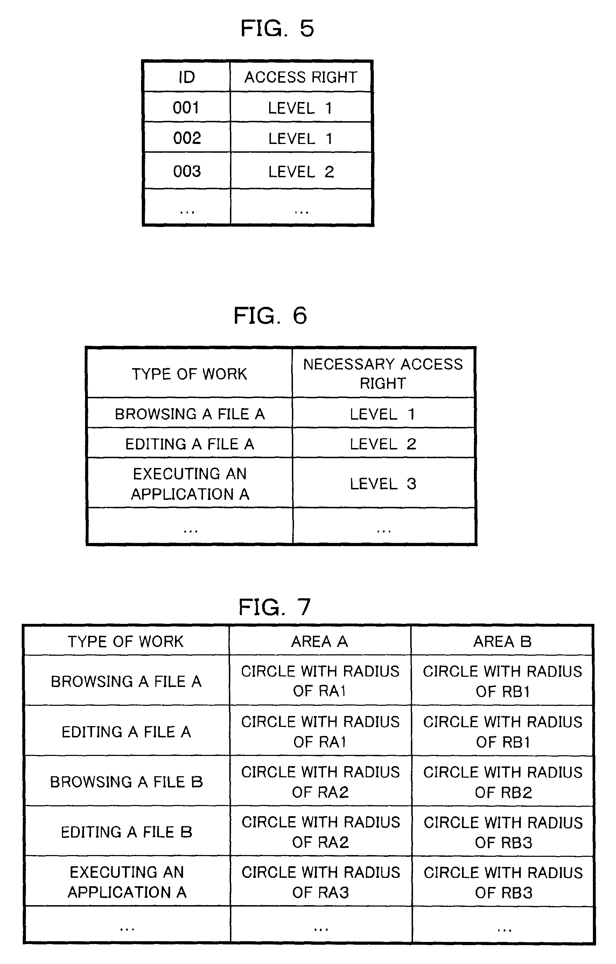

FIG. 5 shows a table as an example of the ID access right management table according to the present embodiment. The access right (level) is set for each registered ID, and stored in the ID access right management table in advance. FIG. 6 shows a table as an example of the type-of-work access right management table according to the present embodiment. A necessary access right (level) is set for each expected type of work, and stored in the type-of-work access right management table in advance. Based on the current type of work the user of the access terminal 102 is engaged in and the type-of-work access right management table, the position prediction section 112 determines the access right necessary for the type of work. Moreover, based on ID of the person under the management of the position management table and the ID access right table, the position prediction section 112 determines the access right of the person. Moreover, the position prediction section 112 compares the access right necessary for the type of work, which was determined as described above, with the access right of the person. If the level of the person's access right is lower than the level of the access right necessary for the type of work, or if the person is not authenticated, the position prediction section 112 determines that the person is an intruder. Incidentally, regardless of type of work, the level of the necessary access right may be fixed to omit the type-of-work access right management table.

Moreover, the position prediction section 112 changes the prediction time, the size of the area A, and the size of the area B depending on type of work (the degree of secrecy of the information output by the access terminal 102). The type of work, for example, includes the type or number of running applications, the amount of time passed since the start of work, and the amount of data changed or added after the start of work. FIG. 7 shows a table as an example of the area management table according to the present embodiment. The radius of the area A, and the radius of the area B are set for each expected type of work, and stored in the area management table in advance.

Incidentally, the prediction time, the size of the area A, and the size of the area B may be predetermined as fixed values by taking into account the time necessary for carrying out operations to prevent leakage of information, such as the time necessary for the user to suspend work after an alarm is raised. Moreover, the position prediction section 112 may change the values in accordance with the type of work at the time when the alarm was raised. The operations necessary for preventing leakage of information includes saving work, and closing a window.

If the predicted position of the intruder is within the area B, the position prediction section 112 raises an alarm to the access terminal 102. Moreover, the predicted position of the intruder predicted by the position prediction section 112 is within the area A, the position prediction section 112 instructs the access terminal 102 to stop work. When the alarm is raised from the access control section 113, the access terminal 102 uses, through the display device 121, characters, images, sounds, vibration or the like to inform the user that the intruder approaches. Moreover, when instructed by the access control section 113 to stop, the access terminal 102 stops output from the display section 121, and suspends input from the input section 122.

At this time, the access terminal 102 may ask the user whether it is possible to suspend access. Here, if the user chooses not to suspend access, the access terminal 102 does not suspend access, records the fact that the access terminal 102 has continued access in accordance with the user's decision, and, at the same time, saves the image of the work space taken by the camera in order to record the situation at that time. The image may be used for analysis or the like to identify a person who does not have the right of access.

The following describes the operation of the information display system according to the present embodiment.

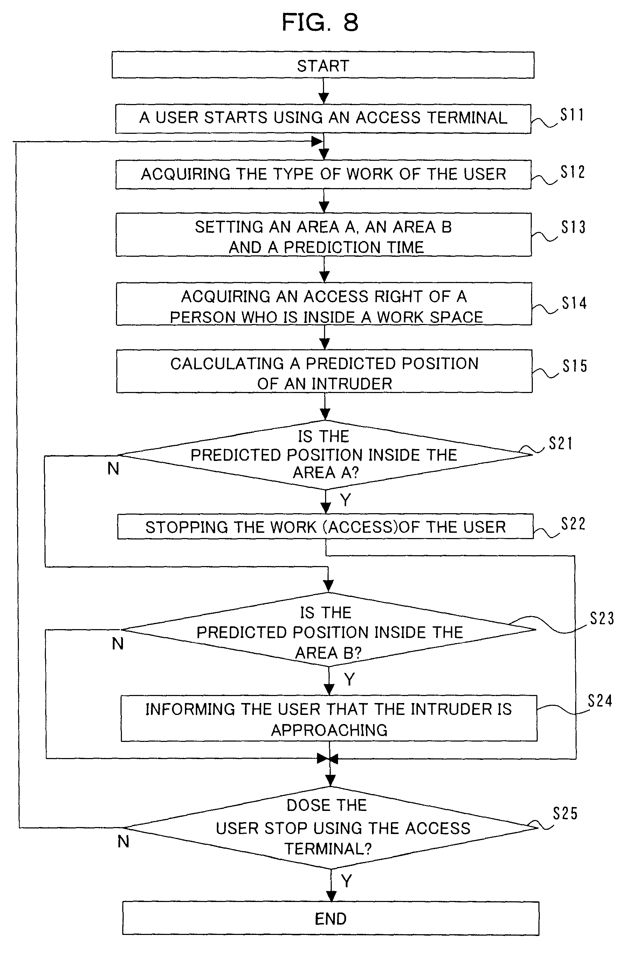

FIG. 8 is a flowchart illustrating an example of the operation of the information display system according to the present embodiment. First, the user starts using the access terminal 102 (S11). Then, the position prediction section 112 acquires from the access control section 113 the current type of work the user is engaged in (S12). Then, the position prediction section 112 determines the size of the area A and the size of the area B based on the type of work the user is engaged in and the area management table, and determines the prediction time based on the type of work and the prediction time management table (S13). Subsequently, the position prediction section 112 acquires the access right of the person who is in the work space using the ID access right management table (S14). Then, the position prediction section 112 regards a person who does not have the access right as an intruder, and calculates the predicted position (positional relation), or the position where the intruder might be after the prediction time has passed (S15).

Then, the position prediction section 112 makes a determination as to whether the predicted position is within the area A (whether the distance between the access terminal 102 and the predicted position is less than or equal to the radius of the area A) (S21). If the predicted position is not within the area A (S21, N), the position prediction section 112 proceeds to a process of S23. If the predicted position is within the area A (S21, Y), the access control section 113 instructs the access terminal 102 to stop work. The instructed access terminal 102 suspends the work (access) the user is engaged in (correspondence)(S22), and proceeds to a process of S25. Here, the access terminal 102 instructed by the access control section 113 to suspend work carries out processes, such as suspending output from the display section 121 and suspending input from the input section 122.

At this time, the access terminal 102 may ask the user whether it is possible to suspend access. In this case, if the user chooses not to suspend access, the access terminal 102 will not suspend access even when a target intruder approaches; the access control section 113 records the fact that the access terminal 102 has continued access in accordance with the user's decision, and, at the same time, saves the image of the work space taken by the camera in order to record the situation at that time.

Then, the position prediction section 112 makes a determination as to whether the predicted position is within the area B (whether the distance between the access terminal 102 and the predicted position is less than or equal to the radius of the area B) (S23). If the predicted position is not within the area B (S23, N), the position prediction section 112 proceeds to a process of S25. If the predicted position is within the area B (S23, Y), the access control section 113 raises an alarm to the access control terminal 102 (correspondence). An output section 131 of the access terminal 102 that received the alarm informs the user that the intruder is approaching (S24), and proceeds to the process of S25. Here, the display section 121 uses characters, images, voice, sound, vibration or the like to inform the user that the person who does not have the access right is approaching.

Then, the access control section 113 makes a determination as to whether the user has stopped using the access terminal 102 (S25). If the user has not stopped using the access terminal 102 (S25, N), the access control section 113 returns to the process of S12. If the user has stopped using the access terminal 102 (S25, Y), the flow ends.

Incidentally, according to the present embodiment, taking into account the risk that, as a result of calculating the predicted position, the position of the intruder might be so close to the user that the informing process cannot inform the user in time, the position prediction section 112 checks whether the prediction position is within the area A where access should be suspended. However, depending on the work space or the installation condition of the authentication device, the position prediction section 112 may start checking from the area B where the informing process should be carried out.

According to the present embodiment, the position of the person who does not have the access right or unauthorized user is tracked, and the position is predicted. Therefore, work can be suspended until the person is allowed to access the access terminal 102, thereby reducing the risk that information will be leaked by a peeper or the like. Moreover, before the person is allowed to access the access terminal 102, the user is notified of the possibility that information might be leaked. Therefore, the user is given enough time to make appropriate preparation. In this manner, convenience is improved.

### Embodiment 2

Here, an example of an information display system to which an information processing apparatus of the present invention is applied will be described. Moreover, according to the present embodiment, the information display system does not require the authentication device.

First, the following describes the configuration of the information display system according to the present embodiment.

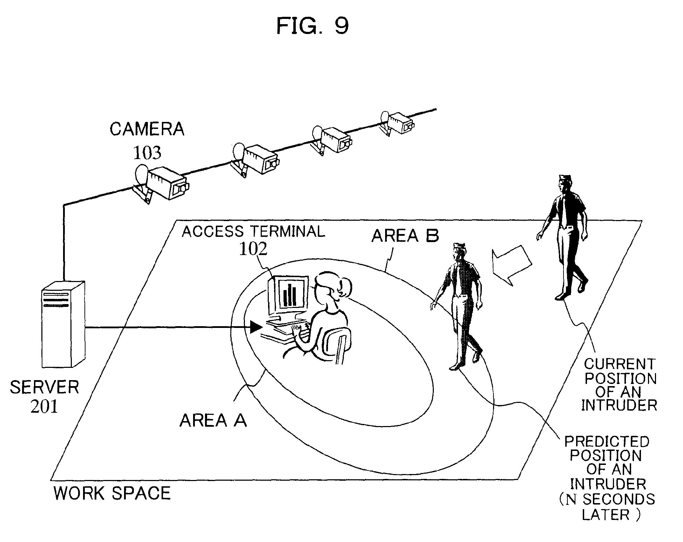

FIG. 9 is a block diagram illustrating an example of the configuration of the information display system according to the present embodiment. In the diagram, the same reference symbols as those of FIG. 1 represent the same, or equivalent, objects as those of FIG. 1, and the description, therefore, will be omitted here. In comparison with the system shown in FIG. 1, the system shown in the diagram includes a server 201 instead of the server 101, and does not require the authentication device 104.

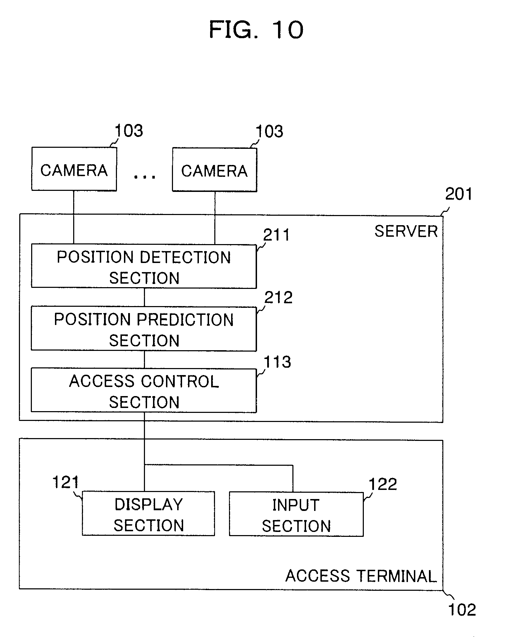

FIG. 10 is a block diagram illustrating an example of the configuration of a server and an access terminal according to the present embodiment. In the diagram, the same reference symbols as those of FIG. 2 represent the same, or equivalent, objects as those of FIG. 2, and the description, therefore, will be omitted here. In comparison with the server 101, the server 201 includes a position detection section 211 instead of the position detection section 111, and a position prediction section 212 instead of the position prediction section 112.

Like the position detection section 111, the position detection section 211 detects the person who enters the work space using the image taken by the camera 103. Moreover, the positions of places shown in the image are associated with the positions of places within the work space in advance. Therefore, the position detection section 211 detects the position of the person in the work space. Moreover, the position detection section 211 detects the user of the access terminal 102 from the position where the access terminal 102 has been placed in advance. The position detection section 211 regards any people other than the user, whom the position detection section 211 has detected, as intruders, and allocates different IDs to the intruders.

Like the position prediction section 112, the position prediction section 212 calculates the predicted position where the intruder might be, and, based on the predicted position, the type of work, and the area management table, makes a determination as to warning and suspension. According to the present embodiment, since any detected people other than the user are regarded as intruders, the ID access right management table and the type-of-work access right management table are unnecessary. The position prediction section 212 calculates the predicted positions of all the intruders, and makes a determination as to whether the intruders have entered the area A and the area B based on the predicted positions of all the intruders. Subsequently, in a similar manner to that of Embodiment 1, the access control section 113 suspends work or raises an alarm based on the result of determination.

Incidentally, instead of the camera, a laser scanner may be used to detect the position of the person.

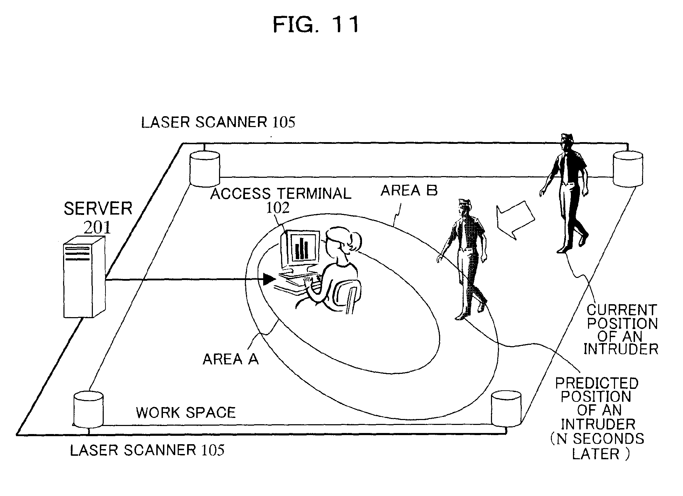

FIG. 11 is a block diagram illustrating an example of another configuration of the information display system according to the present embodiment. In the diagram, the same reference symbols as those of FIG. 9 represent the same, or equivalent, objects as those of FIG. 9, and the description, therefore, will be omitted here. In comparison with the system shown in FIG. 9, the system shown in the diagram includes one or a plurality of laser scanners 105 instead of the camera 103. The laser scanner 105 measures the work space containing the access terminal 102. The position detection section 211 detects a person heading to the work space from the measurement data of the laser scanner 105. For example, the position detection section 211 detects the position of the person from the measurement data of the laser scanner 105 using the technique of Non-Patent Document 1.

According to the present embodiment, authentication is unnecessary for the person who has entered the work space.

### Embodiment 3

Here, an example of an information display system to which an information processing apparatus of the present invention is applied will be described. According to the present embodiment, the information display system controls the size of displayed information (displaying state) in accordance with the position of an unauthorized user (positional relation).

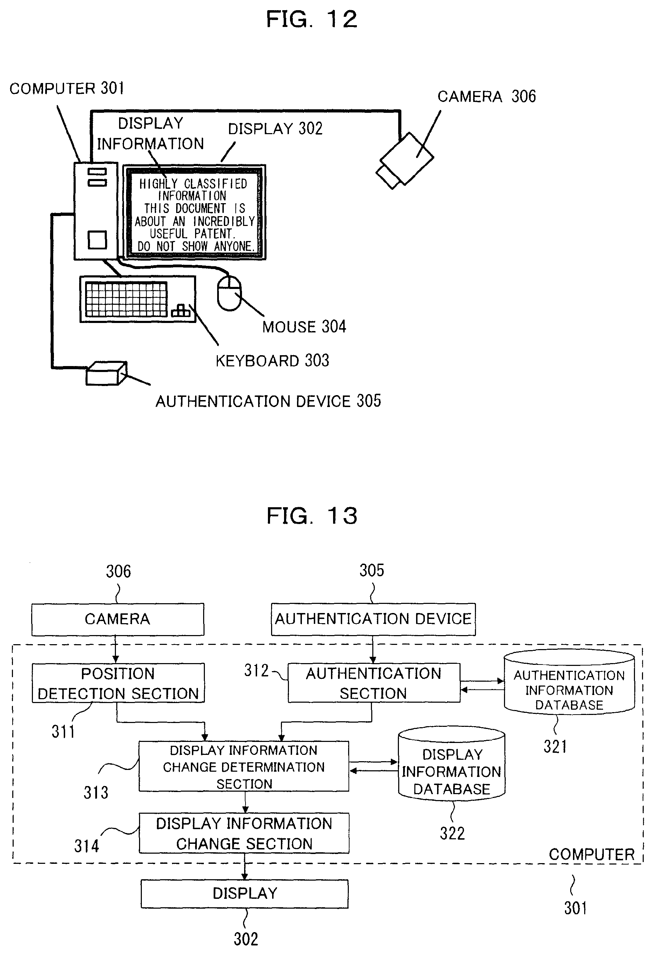

FIG. 12 is a block diagram illustrating an example of the configuration of the information display system according to the present embodiment. The information display system includes a computer (information processing apparatus) 301 such as PC. The following components are connected to the computer 301: a display (display device) 302 that displays information supplied from the computer 301, a keyboard 303 and mouse 304 that input various data into the computer 301, an authentication device 305 that carries out authentication, and a camera 306 that recognizes the position of a person around the computer 301.

The camera 306 is placed so as to take pictures of the area around the computer 301. Incidentally, for example, a laser sensor, a RFID leader, or the like can be substituted for the camera 306 as long as the position of the person can be detected.

FIG. 13 is a block diagram illustrating an example of the configuration of a computer according to the present embodiment. The computer 301 includes an authentication information database 321, and a display information database 322. User information, such as IDs, names, authentication information, the rights to browse information, is registered in the authentication information database 321. The user information is used to perform a user authentication process. In the display information database 322, for each piece of display information which will be browsed on the display 302, a file name, the access right which is necessary to browse the piece of display information, and the level of secrecy for the piece of display information, and the like are registered.

Moreover, the computer 301 includes a position detection section 311, which detects a person from the image taken by the camera 306 and tracks the position of the person; an authentication section 312, which performs authentication based on the authentication information database 321; a display information change determination section 313, which makes a determination as to whether to change the display information in accordance with the position of the person detected by the position detection section 311 and the result of authentication by the authentication section 312; and a display information change section 314, which changes the display information and displays the display information on the display 302.

The following describes a detection process performed by the computer 301.

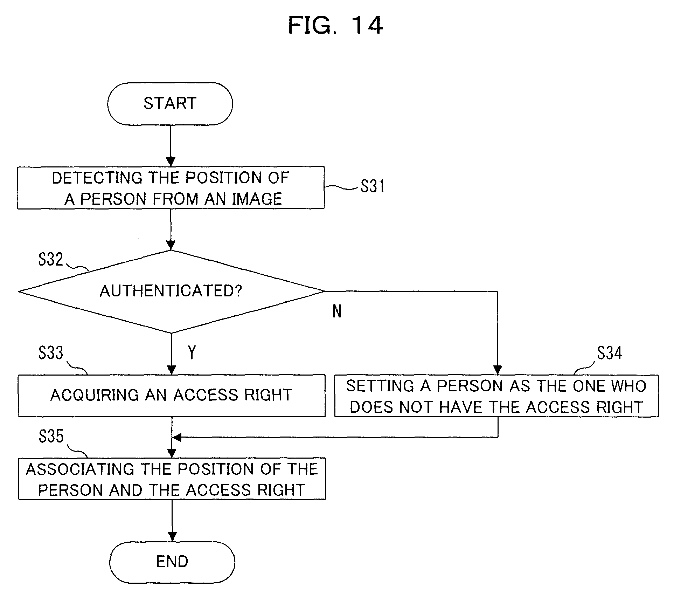

FIG. 14 is a flowchart illustrating an example of the detection process performed by the computer, according to the present embodiment.

First, the position detection section 311 detects the position of the person who is in a monitoring area (work space) around the display 302 from the image taken by the camera 306 (S31). For example, the methods to recognize the position of the person using a plurality of cameras includes the method that uses the back projection method and Kalman filter as described in Non-Patent Document 2. Moreover, the method that users a laser beam, for example, includes the one that uses a multi-laser scanner to measure the foot of a person as described in Non-Patent Document 1.

The authentication section 312 performs authentication using the authentication device 305 at such times as when a person browsing the display information or a person around the display 302 logs into the computer 301 and when the person enters a room where the display 302 is placed. The authentication section 312 then makes a determination as to whether the person is authenticated (S32). Specifically, using the authentication device 305 that uses biometric authentication such as vein or fingerprint, the authentication section 312 carries out a checkup on the authentication information database 321 in order to identify the person, and then outputs personal information about the person. Incidentally, the following method is also available: The authentication section 312 displays a dialog box for authenticating a user on the display 302, and authentication is carried out with a user ID and password. In this case, the authentication device 305 is unnecessary.

If the person is authenticated (S32, Y), the display information change determination section 313 acquires the access right of the person authenticated by the authentication section 312 (S33), and associates the access right with the position of the person based on the position of the place where authentication was carried out by the authentication section 312 (where the authentication device 305 is placed), the position of the person detected by the position detection section 311 at the time of authentication, and the access right of the person authenticated by the authentication section 312 (S35). Then, the flow comes to an end. If the person is not authenticated (S32, N), the display information change determination section 313 sets a person who failed to be authenticated as a person who does not have the right of access to the display information, and associates the position of the person detected by the position detection section 311 with the access right (S35). Then, the flow comes to an end.

The following describes a display process performed by the computer 301.

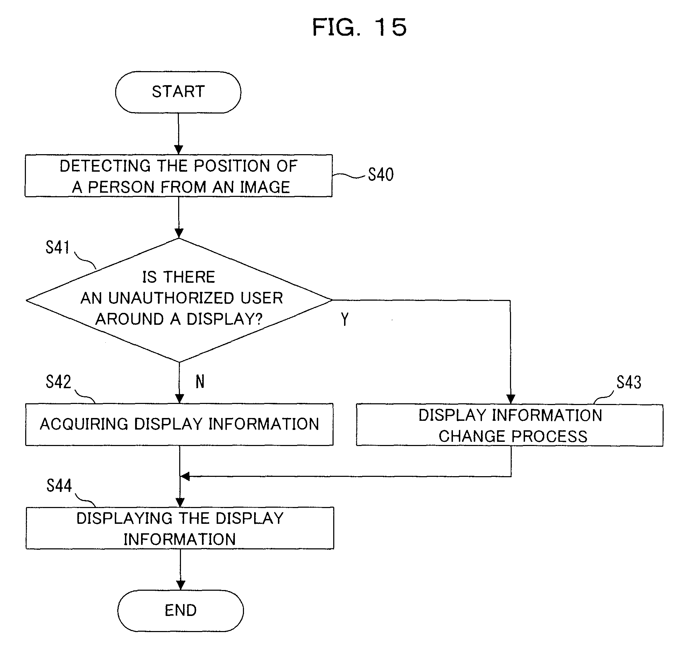

FIG. 15 is a flowchart illustrating an example of the display process performed by the computer, according to the present embodiment. First, the position detection section 311 detects the position of person within the monitoring area (work space) around the display 302 from the image taken by the camera 306 (S40). Then, while the browsing person is browsing the display information, the display information change determination section 313 makes a determination as to whether a person (unauthorized user) who does not have the right of access to the display information is at a position where the person can look at the display information (S41).

If the person is not around the display device (S41, N), the display information change section 314 acquires the display information in accordance with the operation of the browsing person who operates the keyboard 303 and the mouse 304 (S42), and displays the display information on the display 302 (S44). Then, the flow comes to an end. At this time, if the person who tries to display the display information does not have the right to browse the display information, the display 302 does not display the display information.

If the person is around the display device (S41, Y), the display information change section 314 calculates the distance between the unauthorized user and the display 302 based on the position of the unauthorized user and the position of the place where the display 302 is placed in advance, carries out a display information change process to change the display information in accordance with the distance (S43), and displays the display information processed by the display information change process on the display 302 (S44). Then, the flow comes to an end.

Subsequently, the display process is repeated while the browsing person is browsing the display information. Moreover, if it is detected that the unauthorized user has moved away to a place where the unauthorized user cannot watch the display device 302, the display information change section 314 replaces the display information changed by the display information change process with the original display information.

The following describes the display information change process according to the present embodiment.

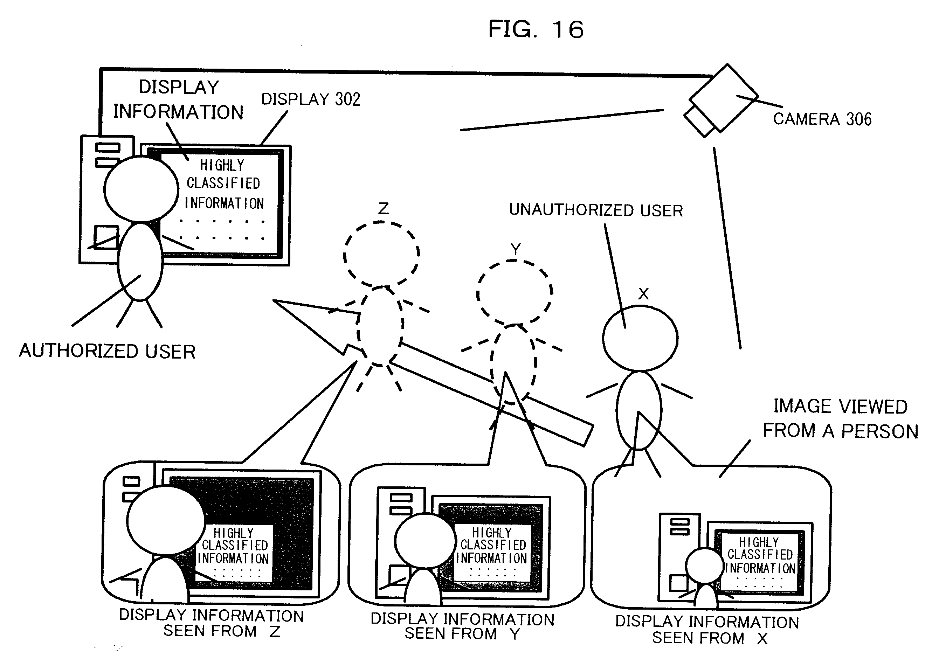

FIG. 16 is a conceptual diagram illustrating an example of the display information change process according to the present embodiment. X, Y, and Z individually represent the position of the unauthorized user. Moreover, the diagram shows the piece of display information seen from X, the piece of display information seen from Y, and the piece of display information seen from Z, so as to make the pieces correspond to the positions. If the unauthorized user moves from X to Y to watch the display information, the distance from the unauthorized user to the display 302 becomes short. However, the size of the display information becomes small. Therefore, the unauthorized user cannot recognize the display information. Similarly, if the unauthorized user moves from Y to Z, the distance from the unauthorized user to the display 302 becomes shorter. However, the size of the display information becomes smaller. Therefore, the unauthorized user cannot recognize the display information.

In the display information change process, the display information change section 314 changes the size of the display information (characters and images) in a way that allows the authorized user to see the display information but does not allow the unauthorized user, before displaying the display information on the display 302. That is, as the unauthorized user approaches the display 302, the size of the display information displayed on the display 302 becomes small. Therefore, the unauthorized user cannot recognize the display information.

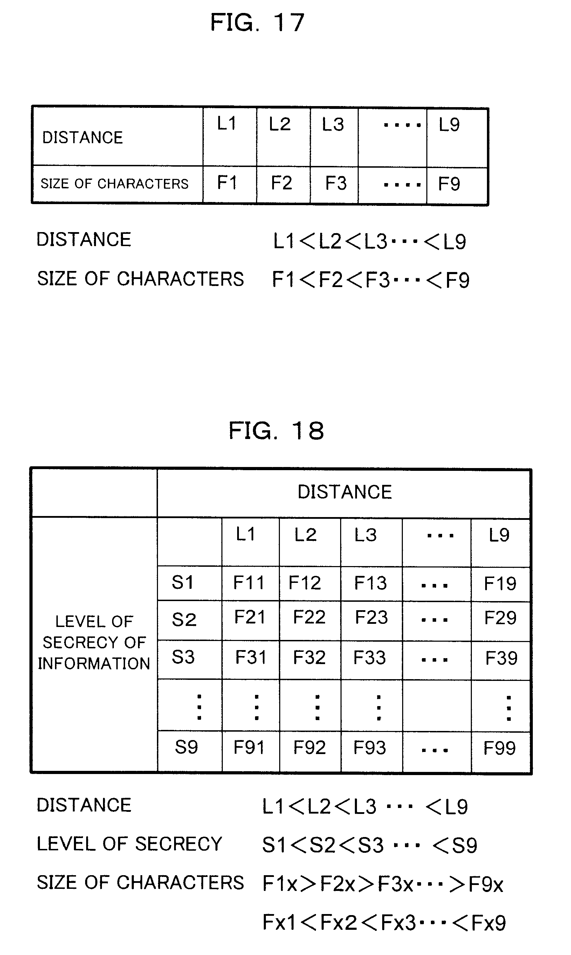

The relation between the distance from the display 302 to the unauthorized user and the size of the display information displayed on the display 302 is preset on a display character size selection table (correspondence). FIG. 17 shows a table as a first example of the display character size selection table according to the present embodiment. According to the display character size selection table, in order not to allow the unauthorized user to see the display information, the relation is set in the following manner: as the distance (L1, L2, ...) between the unauthorized user and the display 302 becomes shorter, the size of characters of the display information (F1, F2, ...) becomes smaller. The character size is represented by point or the ratio of the displayed character size to a standard size. The relation between the distance and the size of the displayed characters is determined based on a criterion like the one disclosed in Non-Patent Document 3. The display information change section 314 determines the size of the displayed characters based on the unauthorized-user distance and the display character size selection table, thereby changing the size of characters displayed on the display 302. Here, only the size of characters is changed. However, the size of images and windows may be similarly changed to decrease the likelihood that the unauthorized user would recognize the display information.

Incidentally, the relation between the distance from the display 302 to the unauthorized user, the level of secrecy of the display information, and the size of the display information displayed on the display 302 may be preset in the display character size selection table. FIG. 18 shows a table as a second example of the display character size selection table according to the present embodiment. In the display information database 322, the level of secrecy (the level of a necessary access right) is preset for each piece of the display information. According to the display character size selection table of this case, as the level of secrecy of the display information (S1, S2, ...) rises, the size of characters of the display information (F11, F21, ...) becomes small. Moreover, as the distance between the unauthorized user and the display 302 (L1, L2, ...) becomes short, the size of characters of the display information (F11, F12, ...) becomes small. Therefore, as the level of secrecy rises, the likelihood that the unauthorized user would see the display information is decreased.

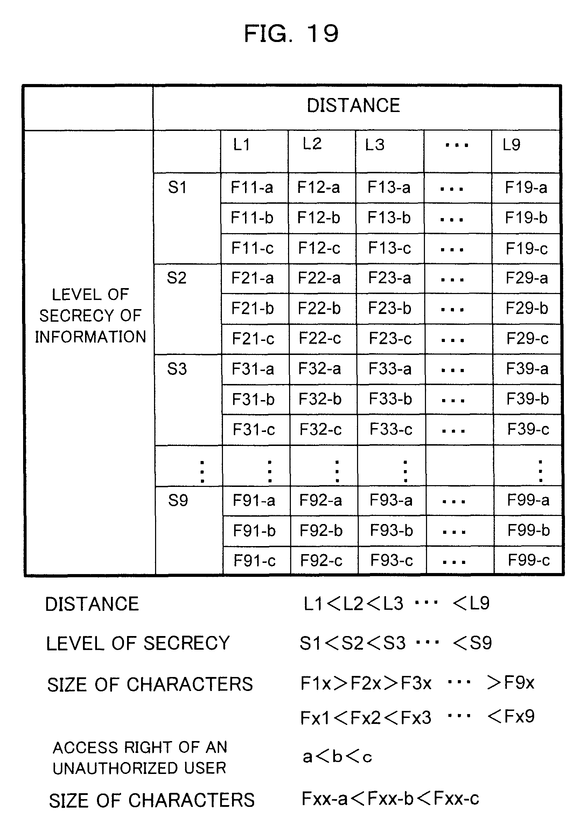

Moreover, the relation between the distance from the display 302 to the unauthorized user, the level of secrecy of the display information, the level of the access right of each person, and the size of the display information displayed on the display 302 may be preset in the display character size selection table. FIG. 19 shows a table as a third example of the display character size selection table according to the present embodiment. According to the display character size selection table of this case, as well as the effect of the second example of the display character size selection table, the following effect can be obtained: As the level of the access right (a, b, ...) of the unauthorized user approaching the display 302 declines with respect to the level of secrecy of the display information (S1, S2, ...), the size of characters of the display information (F11-a, F11-b, ...) becomes smaller. Therefore, the likelihood that the person who does not have the right of access to the display information would see the display information is decreased.

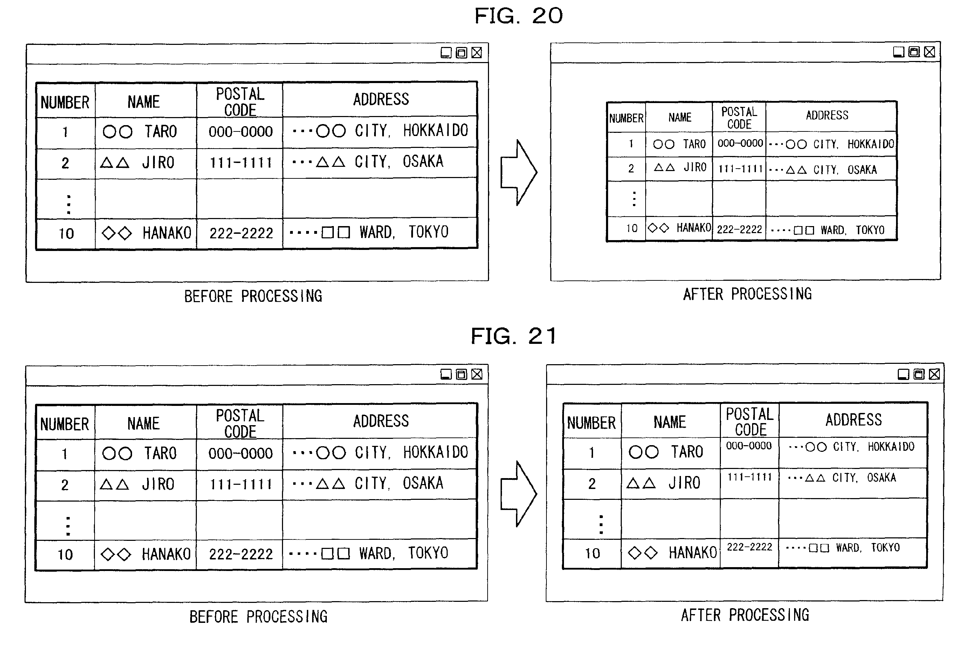

The following describes the results of the display information change process according to the present embodiment. First, as a first example of the display information change process, the following describes the case where the size of the whole piece of the display information is made small. FIG. 20 shows screens as a first example of the display information change process according to the present embodiment. The screen on the left shows the display information before the display information change process. The screen on the right shows the display information after the display information change process. The display information change process makes the character size of the whole piece of the display information small in accordance with the distance.

The following describes the case where the size of a piece of information of a specific kind is made small, as a second example of the display information change process. FIG. 21 shows a screen as the second example of the display information change process according to the present embodiment. The screen on the left shows the display information before the display information change process. The screen on the right shows the display information after the display information change process. According to the display information change process, the character size of a predetermined item, such as an item for personal information the leakage of which is not allowed, is made small.

Moreover, in the display information database 322, a different level of secrecy may be preset for each item including name, address, and phone number. The degree of change in the size of the display information may vary according to item.

### Embodiment 4

Here, an example of an information display system to which an information processing apparatus of the present invention is applied will be described. According to the present embodiment, the information display system controls the contrast of the display information (displaying state) according to where the unauthorized user is.

According to the present embodiment, the configuration of the display information system and the computer is the same as that of Embodiment 3. Moreover, according to the present embodiment, the detection process and the display process are the same as those of Embodiment 3, but only the display information change process is different.

The following describes the display information change process according to the present embodiment.

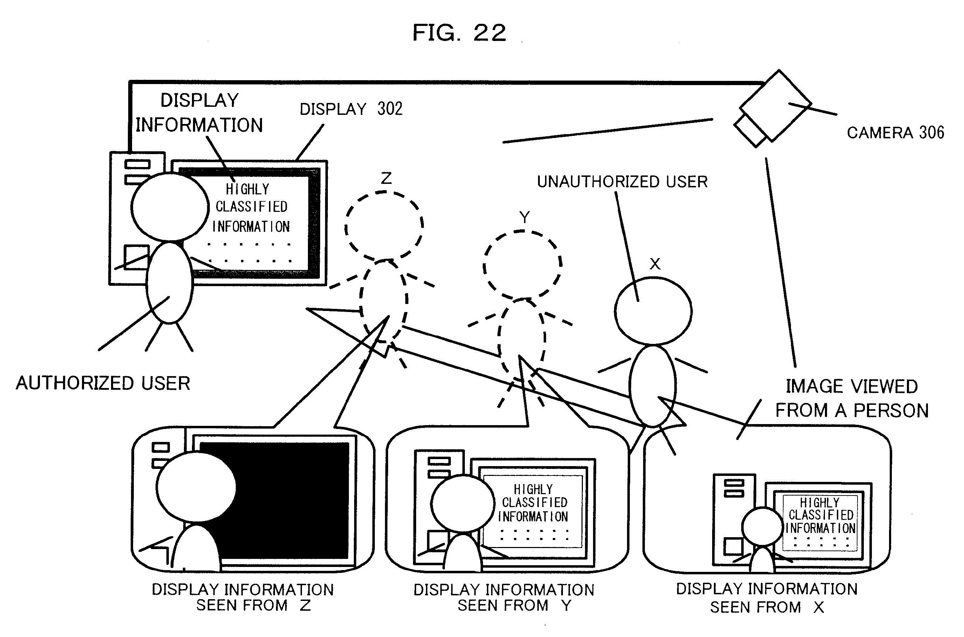

FIG. 22 is a conceptual diagram illustrating an example of the display information change process according to the present embodiment. X, Y, and Z individually represent the positions of the unauthorized user. Moreover, the diagram shows the piece of display information seen from X, the piece of display information seen from Y, and the piece of display information seen from Z, so as to make the pieces correspond to the positions. If the unauthorized user moves from X to Y to watch the display information, the distance from the unauthorized user to the display 302 becomes short. However, the contrast of the display information decreases. Therefore, the unauthorized user cannot recognize the display information. Similarly, the unauthorized user moves from Y to Z, the distance from the unauthorized user to the display 302 becomes shorter. However, the contrast of the display information declines further. Therefore, the unauthorized user cannot recognize the display information.

In the display information change process, the display information change section 314 changes, as illustrated in the diagram, the contrast of the display information (characters and images) in a way that allows the authorized user to see the display information but does not allow the unauthorized user, before displaying the display information on the display 302. That is, as the unauthorized user approaches the display 302, the contrast of the display information displayed on the display 302 decreases. Therefore, the unauthorized user cannot recognize the display information.

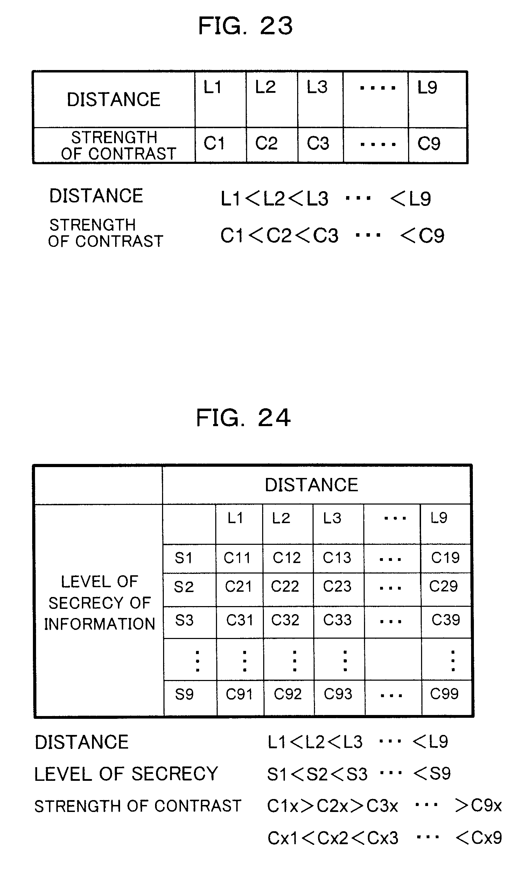

The relation between the distance from the display 302 to the unauthorized user and the contrast of the display information displayed on the display 302 is preset on a display contrast strength selection table (correspondence). FIG. 23 shows a table as a first example of the display contrast strength selection table according to the present embodiment. According to the display contrast strength selection table, in order not to allow the unauthorized user to see the display information, the relation is set in the following manner: as the distance (L1, L2, ...) between the unauthorized user and the display 302 becomes shorter, the contrast of the display information (Strength of contrast: C1, C2, ...) decreases. The contrast is represented by a gradation number or the ratio of the displayed information's contrast to a standard contrast. As the contrast declines, the brightness of the characters' color declines and the brightness of the background color increases, each approaching the predetermined median brightness. Therefore, the likelihood that the unauthorized user would recognize the display information can be decreased. Incidentally, when the distance between the unauthorized user and the display 302 becomes short, the display information change section 314 may perform such processes as lowering the brightness of the display information, changing a combination of the characters' color and the background color so as to make the characters and the background less noticeable, or applying stronger shading to the display information.

Incidentally, the relation between the distance from the display 302 to the unauthorized user, the level of secrecy of the display information, and the contrast of the display information displayed on the display 302 may be preset on a display contrast strength selection table. FIG. 24 shows a table as a second example of the display contrast strength selection table according to the present embodiment. In the display information database 322, the level of secrecy (the level of a necessary access right) is preset for each piece of the display information. According to the display contrast strength selection table of this case, as the level of secrecy of the display information (S1, S2, ...) rises, the contrast of the display information (C11, C21, ...) decreases. Moreover, as the distance between the unauthorized user and the display 302 (L1, L2, ...) becomes short, the contrast of the display information (C11, C12, ...) decreases. Therefore, as the level of secrecy rises, the likelihood that the unauthorized user would see the display information is decreased.

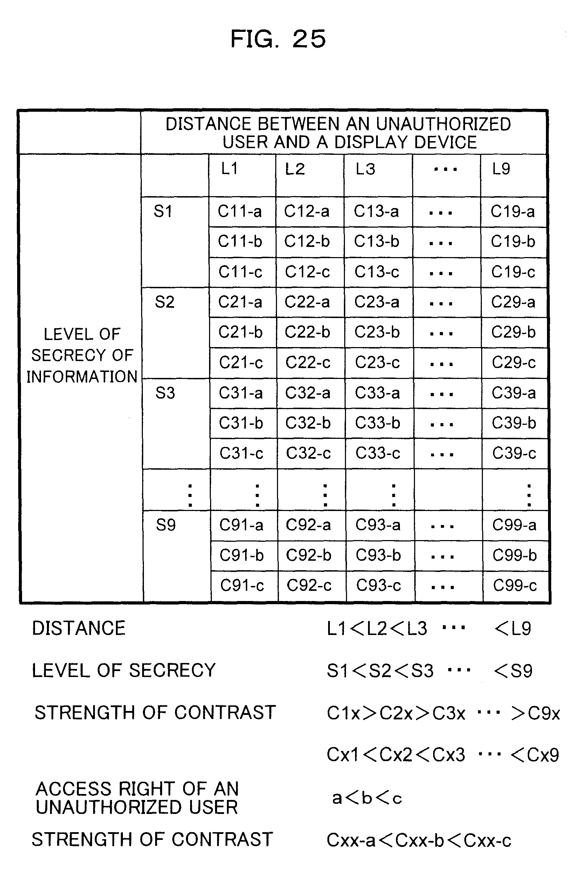

Moreover, the relation between the distance from the display 302 to the unauthorized user, the level of secrecy of the display information, the level of the access right of each person, and the contrast of the display information displayed on the display 302 may be preset on a display contrast strength selection table. FIG. 25 shows a table as a third example of the display contrast strength selection table according to the present embodiment. According to the display contrast strength selection table of this case, as well as the effect of the second example of the display contrast strength selection table, the following effect can be obtained: As the level of the access right (a, b, ...) of the unauthorized user approaching the display 302 declines with respect to the level of secrecy of the display information (S1, S2, ...), the contrast of the display information (C11-a, C11-b, ...) decreases. Therefore, the likelihood that the person who does not have the right of access to the display information would see the display information is decreased.

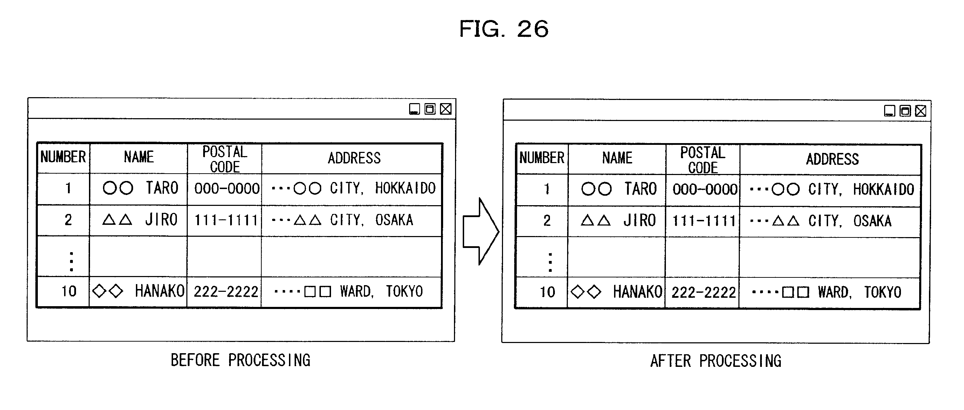

The following describes the results of the display information change process according to the present embodiment. First, as a first example of the display information change process, the following describes the case where the contrast of the whole piece of the display information is decreased. FIG. 26 shows screens as a first example of the display information change process according to the present embodiment. The screen on the left shows the display information before the display information change process. The screen on the right shows the display information after the display information change process. The display information change process decreases the contrast of the whole piece of the display information in accordance with the distance.

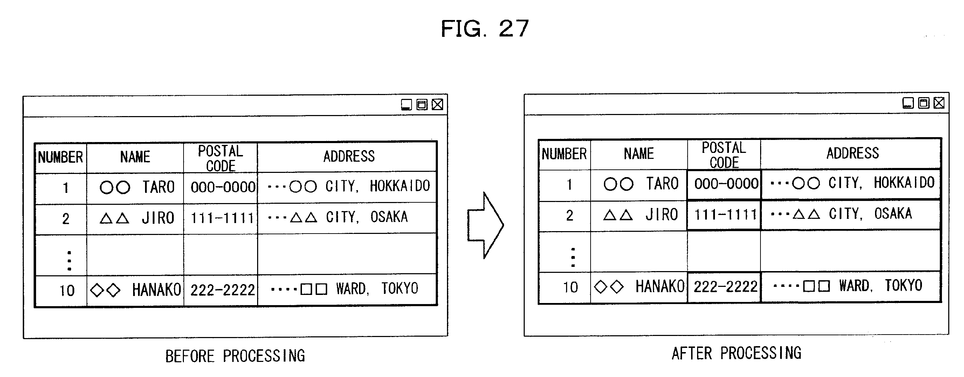

The following describes the case where the contrast of a piece of information of a specific kind is decreased, as a second example of the display information change process. FIG. 27 shows a screen as the second example of the display information change process according to the present embodiment. The screen on the left shows the display information before the display information change process. The screen on the right shows the display information after the display information change process. According to the display information change process, the contrast of a predetermined item, such as an item for personal information the leakage of which is not allowed, is decreased.

Moreover, in the display information database 322, a different level of secrecy may be preset for each item including name, address, and phone number. The degree of change in the contrast of the display information may vary according to item.

According to the above-mentioned Embodiments 3 and 4, even if the person who does not have the access right approaches, only the size or contrast of the display information is changed. Therefore, the authorized user of the display information can continue work without being suddenly forced to suspend. Moreover, the change in the size or contrast of the characters tells the authorized user the distance between the display and the unauthorized user. Accordingly, while continuing work, the authorized user can recognize the degree of risk about the leakage of information. Therefore, the decrease in working efficiency and the leakage of information can be prevented.

### Embodiment 5

Here, an example of an information display system to which an information processing apparatus of the present invention is applied will be described. According to the present embodiment, the information display system controls the position of the display information according to where the unauthorized user is.

According to the present embodiment, the configuration of the display information system and the computer is the same as that of Embodiment 3. Moreover, according to the present embodiment, the detection process and the display process are the same as those of Embodiment 3, but only the display information change process is different.

The following describes the display information change process according to the present embodiment.

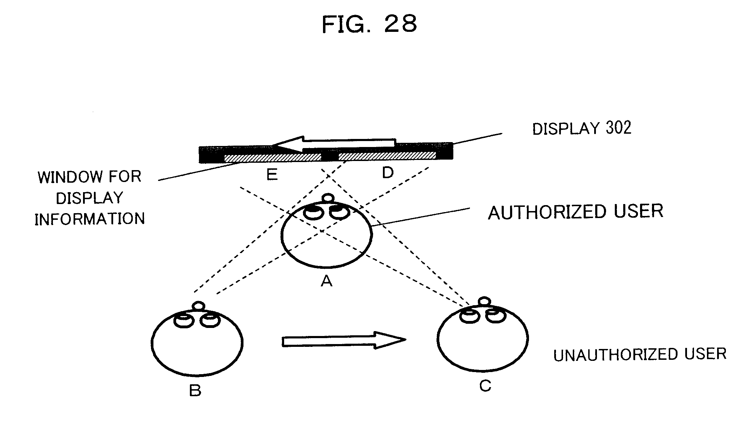

FIG. 28 is a conceptual diagram illustrating an example of the display information change process according to the present embodiment. The diagram shows the position of the display 302 and the positions of the persons viewed from above: the position A is a place where the authorized user (browsing person) of the computer 301 is, the position B is a place where the unauthorized user (person who does not have the access right) was before the unauthorized user moved, and the position C is a place where the unauthorized user is after the unauthorized user moved. When the unauthorized user is at B, the display information change section 314 sets the position of a window where information is displayed at D on the display 302. When the unauthorized user has moved to C, the display information change section 314 sets the position of the window where information is displayed at E on the display 302.

In that manner, the display information change section 314 sets the position of the information-display window in a way that allows the authorized user to see the information but does not allow the unauthorized user to see the information. For example, the display information change section 314 places the information-display window on a straight line extending from the authorized user to the unauthorized user. Therefore, the unauthorized user's view of the display information is blocked by the authorized user, and the unauthorized user cannot see the display information.

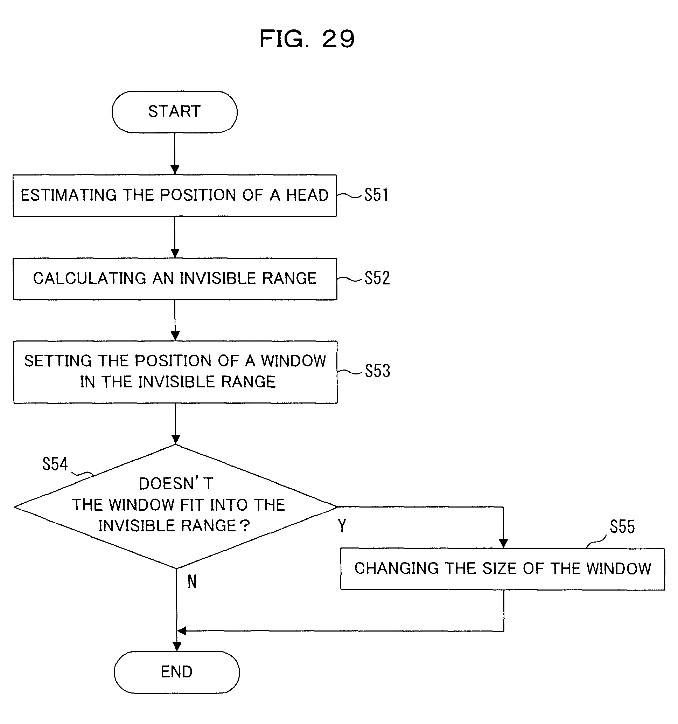

FIG. 29 is a flowchart illustrating an example of the display information change process according to the present embodiment. First, the display information change section 314 estimates the position of the head of a person from the position of the person obtained by the position detection section 311 (S51). Then, the display information change section 314 calculates an invisible area on the display 302 (correspondence) that the unauthorized user cannot see, based on the position of the display 302, the position of the authorized user's head, and the position of the unauthorized user's head (positional relation)(S52). Then, the display information change section 314 sets the position of the information-display window within the invisible area (S53). Subsequently, the display information change section 314 makes a determination as to whether the information-display window does not fit into the invisible range. If the information-display window fits into the invisible range (S54, N), the flow comes to an end. If the information-display window does not fit into the invisible area (S54, Y), the display information change section 314 decreases the size of the information-display window so that the information-display window fits into the invisible area (S55), and the flow comes to end.

According to the present embodiment, even if the unauthorized user approaches, the authorized user of the display information can continue work in accordance with the position of the unauthorized user. Therefore, the decrease in working efficiency can be prevented.

Incidentally, each of the above-mentioned Embodiments 3, 4, and 5 can be combined with the other Embodiment 3, 4, or 5. For example, while the position of the information-display window is changed, the size of characters of the display information is also changed. Such a combination contributes to a further increase in security capability.

Moreover, each of the above-mentioned Embodiments 1, 2, 3, 4, and 5 can be combined with the other Embodiment 1, 2, 3, 4, or 5. For example, when the intruder enters the area B, the position of the display information is changed based on the position of the intruder; when the intruder enters the area A, work is suspended. Such a combination contributes to a further increase in security capability.

Moreover, a positional relation acquisition section corresponds to the position detection section 111 and the position prediction section 112, or the position detection section 311 and the display information change determination section 313 in the embodiments. A control section corresponds to the access control section 113, or the display information change section 314 in the embodiments. An authentication section corresponds to the authentication device 104, or the authentication section 312 in the embodiments.

Moreover, a positional relation acquisition step corresponds to the processes of S12 to S15, or the processes of S31 to S35 in the embodiments. A control step corresponds to the processes of S21 to S24, or the process of S43 in the embodiments. An authentication step corresponds to the process of the authentication device 104, or the process of the authentication section 312 in the embodiments.

Furthermore, a program that causes a computer constituting the information processing apparatus to perform the above steps can be provided as an information processing program. When the above-mentioned program is stored in a computer-readable recording medium, the above steps can be performed by the computer constituting the information processing apparatus. Here, the above computer-readable recording medium includes: an internal storage device, such as ROM and RAM, which is mounted inside the computer; a portable storage medium such as CD-ROM, a flexible disk, a DVD disk, a magneto-optical disk, or an IC card; a database in which computer programs are stored; another computer and database thereof; and a transmission medium on a network line.

### Industrial Applicability

As described above, the leakage of information displayed on the display device can be prevented.

## Claims

1. An information processing apparatus that controls a display device capable of displaying information, comprising:
a positional relation acquisition section that detects a person who is in a predetermined area around the display device and acquires a positional relation between the person and the display device; and
a control section that stores a correspondence between the positional relation and the state of displaying on the display device and controls the state of displaying on the display device based on the correspondence and the positional relation acquired by the positional relation acquisition section.

2. The information processing apparatus according to claim 1, further comprising
an authentication section that authenticates a person at an authentication position which is a predetermined position inside the predetermined area, wherein
the positional relation acquisition section associates, when a person is authenticated by the authentication section, the person and a person detected by the positional relation acquisition section at the authentication position at the time of authentication of the person, and makes a determination as to whether the person has the right of access to display information displayed on the display device.

3. The information processing apparatus according to claim 2, wherein
the positional relation acquisition section determines that among the detected persons, a person who is not authenticated by the authentication section does not have the right of access to the display information.

4. The information processing apparatus according to claim 2, wherein
the positional relation acquisition section regards, among the detected persons, a person who does not have the right of access to the display information as a target person, and
the control section controls the state of display on the display device based on the correspondence and the positional relation related to the target person.

5. The information processing apparatus according to claim 2, wherein
the control section changes the correspondence based on at least either the access right or the type of the display information.

6. The information processing apparatus according to claim 1, wherein
the positional relation acquisition section regards, among persons detected by the positional relation acquisition section, all persons, other than persons who were determined as authorized users of the display device, as target persons, and acquires the positional relation related to the target persons, and
the control section controls the state of display on the display device based on the correspondence and the positional relation related to the target persons.

7. The information processing apparatus according to claim 1, wherein
the positional relation acquisition section recognizes the same person from the results of detection at different times, maintains a history of the positional relation of each person, and predicts the positional relation at a time when a predetermined period of time has passed since now.

8. The information processing apparatus according to claim 4, wherein
the correspondence includes a correspondence between a range of the positional relation and the state of displaying on the display device, and
the control section displays, if the positional relation related to the target person is within a predetermined first range, the existence of the person on the display device.

9. The information processing apparatus according to claim 8, wherein
the control section lets the display section stop displaying if the positional relation related to the target person is within a second range which is different from the first range.

10. The information processing apparatus according to claim 4, wherein
the positional relation acquisition section acquires the positional relation between the detected person, the authorized user of the display device and the display device,
the correspondence includes a relation between the positional relation and the position of display information displayed on the display device, and
the control section controls at least the position of the display information so that the target person's view of the display information is blocked by the authorized user.

11. The information processing apparatus according to claim 4, wherein
the positional relation includes the distance between a person detected by the positional relation acquisition section and the display device.

12. The information processing apparatus according to claim 11, wherein
the correspondence includes a relation between the distance and the size of the display information displayed on the display device, and
the control section decreases the size of the display information displayed on the display device as the distance related to the target person becomes short.

13. The information processing apparatus according to claim 11, wherein
the correspondence includes a relation between the distance and the contrast of the display information displayed on the display device, and
the control section decreases the contrast of the display information displayed on the display device as the distance related to the target person becomes short.

14. The information processing apparatus according to claim 1, wherein
based on the result of scanning a predetermined area or an taken image of the predetermined area, the positional relation acquisition section detects a person in the predetermined area.

15. The information processing apparatus according to claim 1, wherein
the display device displays using at least characters, images, sound, or vibration in accordance with instruction from the control section.

16. An information processing program that causes a computer to perform a process of controlling a display device capable of displaying information, comprising:
a positional relation acquisition step that detects a person who is in a predetermined area around the display device and acquires a positional relation between the person and the display device; and
a control step that stores a correspondence between the positional relation and the state of displaying on the display device and controls the state of displaying on the display device based on the correspondence and the positional relation acquired by the positional relation acquisition section.

17. The information processing program according to claim 16, wherein
the program causes the computer to perform, before the positional relation acquisition step, an authentication step to authenticate a person at an authentication position which is a predetermined position inside the predetermined area, and
the positional relation acquisition step associates, when a person is authenticated by the authentication section, the person and a person detected by the positional relation acquisition section at the authentication position at the time of authentication of the person, and makes a determination as to whether the person has the right of access to display information displayed on the display device.

18. The information processing program according to claim 17, wherein
the positional relation acquisition step determines that among the detected persons, a person who is not authenticated by the authentication step does not have the right of access to the display information.

19. The information processing program according to claim 17, wherein
the positional relation acquisition step regards, among the detected persons, a person who does not have the right of access to the display information as a target person, and
the control step controls the state of displaying on the display device based on the correspondence and the positional relation related to the target person.

20. An information processing method that controls a display device capable of displaying information, comprising:
a positional relation acquisition step that detects a person who is in a predetermined area around the display device and acquires a positional relation between the person and the display device; and
a control step that stores a correspondence between the positional relation and the state of displaying on the display device and controls the state of displaying on the display device based on the correspondence and the positional relation acquired by the positional relation acquisition section.
